# EUROPEAN PATENT APPLICATION

(11) **EP 3 855 858 A1**
(43) Date of publication of application: **28.07.2021**
(21) Application number: 21153448.2
(22) Date of filing: 26.01.2021
(51) Int. Cl.: H04W 76/10, H04W 48/18

(54) **IMPROVEMENTS FOR ADMISSION CONTROL AND NETWORK SHARING IN CELLULAR COMMUNICATION NETWORKS**

(30) Priority: 27.01.2020 IN 202041003611
(71) Applicant: Nokia Solutions and Networks Oy, 02610 Espoo (FI)
(72) Inventor: Arjona, Andres, Tokyo, Tokyo 153-0043 (JP); Alwar, Ethiraj, 560093 Bangalore (IN)
(74) Representative: Nokia EPO representatives

(57) **Abstract**

According to an example aspect of the present invention, there is provided a method for a distributed unit, comprising, receiving from a central unit, by an apparatus, a message comprising a radio bearer configuration of the central unit, wherein the message is received over an interface between the apparatus and the central unit, and the message comprises information associated with the interface between the apparatus and the central unit.

## Description

### FIELD

Various example embodiments relate in general to cellular communication networks and more specifically, to improvements for admission control and network sharing in such networks.

### BACKGROUND

Efficient admission control and network sharing are very important features in various wireless communication networks, such as, in cellular networks operating according to Long Term Evolution, LTE, and/or 5G radio access technology. 5G radio access technology may also be referred to as New Radio, NR, access technology. Since its inception, LTE has been widely deployed and 3rd Generation Partnership Project, 3GPP, still develops LTE. Similarly, 3GPP also develops standards for 5G/NR. In general, there is a need to provide methods, apparatuses and computer programs for improving admission control and network sharing in cellular communication networks, e.g., when Central Units, CUs, and Distributed Units, DUs, are in use. Such improvements may be exploited for 5G networks and also for other cellular communication networks in the future as well.

### SUMMARY

According to some aspects, there is provided the subject-matter of the independent claims. Some embodiments are defined in the dependent claims.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect of the present invention, there is provided an apparatus comprising means for receiving, from a central unit, a message comprising a radio bearer configuration of the central unit, wherein the message is received over an interface between the apparatus and the central unit, and the message comprises information associated with the interface between the apparatus and the central unit. The apparatus of the first aspect may be a Distributed Unit, DU, or control device configured to control the functioning thereof, possibly when installed therein.

Embodiments of the first aspect may comprise at least one feature from the following bulleted list:
- The apparatus may further comprise means for receiving, from a user equipment, a radio resource control setup request message upon receiving the message from the central unit and means for transmitting, to the user equipment, a response to the received radio resource control setup request message, wherein the response comprises the radio bearer configuration of the central unit or a rejection to the radio resource control setup request message;
- The response may be transmitted directly upon successful admission control of the user equipment or directly upon unsuccessful admission control of the user equipment;
- The response may be transmitted to the user equipment without transmitting an additional message to the central unit and/or without receiving an additional message from the central unit after reception of the message comprising the radio bearer configuration of the central unit and prior to transmission of the response;
- The response may be a radio resource control setup message;
- Said information associated with the interface between the central unit and the apparatus may comprise information associated with a setup of the interface;
- The interface may be an F1 interface and the message received from the central unit may be an F1 setup response message;
- The message comprising the radio bearer configuration of the central unit may be received from the central unit during a setup of the interface;
- The radio bearer configuration of the central unit may be common for all user equipments associated with the central unit;
- The apparatus may further comprise means for detecting that a public land mobile network of the central unit does not correspond to a public land mobile network of the user equipment and means for transmitting, based on the detection, a message comprising the radio bearer configuration of the central unit to another central unit;
- The message comprising the radio bearer configuration of the central unit may be an initial uplink radio resource control message transfer message;
- The apparatus may further comprise means for receiving, from another central unit, a message comprising a radio bearer configuration of said another central unit;
- The apparatus may be a distributed unit in a distributed architecture of a radio access network node;
- The distributed unit may be located in the radio access network node along with the central unit and the message comprising the radio bearer configuration of the central unit may be received over the interface between the distributed unit and the central unit.

According to a second aspect of the present invention, there is provided an apparatus comprising means for transmitting, to a distributed unit, a message comprising a radio bearer configuration of the apparatus, wherein the message is transmitted over an interface between the apparatus and the distributed unit, and the message comprises information associated with the interface between the apparatus and the distributed unit. The apparatus of the second aspect may be a Central Unit, CU or control device configured to control the functioning thereof, possibly when installed therein.

Embodiments of the second aspect may comprise at least one feature from the following bulleted list:
- Said information associated with the interface between the apparatus and the distributed unit may comprise information associated with a setup of the interface;
- The interface may be a F1 interface and the message received from the central unit may be a F1 setup response message;
- The message comprising the radio bearer configuration of the central unit may be transmitted to the distributed unit during a setup of the interface;
- The radio bearer configuration may be common for all user equipments associated with the apparatus;
- The apparatus may be a central unit in a distributed architecture of a radio access network node;
- The central unit may be located in the radio access network node along with the distributed unit and the message comprising the radio bearer configuration of the apparatus may be transmitted over the interface between the distributed unit and the central unit.

According to a third aspect, there is provided a first method, for a distributed unit, comprising receiving from a central unit, by an apparatus, a message comprising a radio bearer configuration of the central unit, wherein the message is received over an interface between the apparatus and the central unit, and the message comprises information associated with the interface between the apparatus and the central unit.

According to a fourth aspect, there is provided a second method, for a central unit, comprising transmitting to a distributed unit, by an apparatus, a message comprising a radio bearer configuration of the apparatus, wherein the message is transmitted over an interface between the apparatus and the distributed unit, and the message comprises information associated with the interface between the apparatus and the distributed unit.

According to a fifth aspect of the present invention, there is provided an apparatus comprising at least one processing core, at least one memory including computer program code, the at least one memory and the computer program code being configured to, with the at least one processing core, cause the apparatus at least to perform, receive, from a central unit, a message comprising a radio bearer configuration of the central unit, wherein the message is received over an interface between the apparatus and the central unit, and the message comprises information associated with the interface between the apparatus and the central unit. The apparatus of the fifth aspect may be a Distributed Unit, DU, or control device configured to control the functioning thereof, possibly when installed therein.

Embodiments of the fifth aspect may comprise at least one feature from the following bulleted list:
- The at least one memory and the computer program code may be further configured to, with the at least one processing core, cause the apparatus at least to perform, receive, from a user equipment, a radio resource control setup request message upon receiving the message from the central unit and transmit, to the user equipment, a response to the received radio resource control setup request message, wherein the response comprises the radio bearer configuration of the central unit or a rejection to the radio resource control setup request message;
- The response may be transmitted directly upon successful admission control of the user equipment or directly upon unsuccessful admission control of the user equipment;
- The response may be transmitted to the user equipment without transmitting an additional message to the central unit and/or without receiving an additional message from the central unit after reception of the message comprising the radio bearer configuration of the central unit and prior to transmission of the response;
- The response may be a radio resource control setup message;
- Said information associated with the interface between the central unit and the apparatus may comprise information associated with a setup of the interface;
- The interface may be an F1 interface and the message received from the central unit may be an F1 setup response message;
- The message comprising the radio bearer configuration of the central unit may be received from the central unit during a setup of the interface;
- The radio bearer configuration of the central unit may be common for all user equipments associated with the central unit;
- The at least one memory and the computer program code may be further configured to, with the at least one processing core, cause the apparatus at least to perform, detect that a public land mobile network of the central unit does not correspond to a public land mobile network of the user equipment and transmit, based on the detection, a message comprising the radio bearer configuration of the central unit to another central unit;
- The message comprising the radio bearer configuration of the central unit may be an initial uplink radio resource control message transfer message;
- The at least one memory and the computer program code may be further configured to, with the at least one processing core, cause the apparatus at least to perform, receive, from another central unit, a message comprising a radio bearer configuration of said another central unit;
- The apparatus may be a distributed unit in a distributed architecture of a radio access network node;
- The distributed unit may be located in the radio access network node along with the central unit and the message comprising the radio bearer configuration of the central unit may be received over the interface between the distributed unit and the central unit.

According to a sixth aspect of the present invention, there is provided an apparatus comprising at least one processing core, at least one memory including computer program code, the at least one memory and the computer program code being configured to, with the at least one processing core, cause the apparatus at least to perform, transmit, to a distributed unit, a message comprising a radio bearer configuration of the apparatus, wherein the message is transmitted over an interface between the apparatus and the distributed unit, and the message comprises information associated with the interface between the apparatus and the distributed unit. The apparatus of the sixth aspect may be a Central Unit, CU or control device configured to control the functioning thereof, possibly when installed therein.

Embodiments of the sixth aspect may comprise at least one feature from the following bulleted list:
- Said information associated with the interface between the apparatus and the distributed unit may comprise information associated with a setup of the interface;
- The interface may be a F1 interface and the message received from the central unit may be a F1 setup response message;
- The message comprising the radio bearer configuration of the central unit may be transmitted to the distributed unit during a setup of the interface;
- The radio bearer configuration may be common for all user equipments associated with the apparatus;
- The apparatus may be a central unit in a distributed architecture of a radio access network node;
- The central unit may be located in the radio access network node along with the distributed unit and the message comprising the radio bearer configuration of the apparatus may be transmitted over the interface between the distributed unit and the central unit.

According to a seventh aspect of the present invention, there is provided non-transitory computer readable medium having stored thereon a set of computer readable instructions that, when executed by at least one processor, cause an apparatus to at least perform the first method. According to an eighth aspect of the present invention, there is provided non-transitory computer readable medium having stored thereon a set of computer readable instructions that, when executed by at least one processor, cause an apparatus to at least perform the second method.

According to a ninth aspect of the present invention, there is provided a computer program configured to perform the first method. According to a tenth aspect of the present invention, there is provided a computer program configured to perform the second method.

### BRIEF DESCRIPTION OF THE DRAWINGS

FIGURE 1 illustrates an exemplary network scenario in accordance with at least some embodiments;
FIGURE 2 illustrates a base station in accordance with at least some embodiments;
FIGURE 3 illustrates an example apparatus capable of supporting at least some embodiments;
FIGURE 4 illustrates an exemplary signalling graph in accordance with at least some embodiments;
FIGURE 5 illustrates a flow graph of a first method in accordance with at least some embodiments;
FIGURE 6 illustrates a flow graph of a second method in accordance with at least some embodiments.

### EMBODIMENTS

Efficient admission control and network sharing may be achieved in a cellular communication network by the procedures described herein. More specifically, radio bearer configuration may be improved for admission control and network sharing when Central Units, CUs, and Distributed Units, DUs, are in use. A CU may transmit a message comprising a radio bearer configuration of the CU to a DU. The message comprising the radio bearer configuration of the CU may be transmitted during a setup of an interface between the CU and the DU, such as an F1 interface, for example. Hence the DU may directly reply for example to a Radio Resource Control, RRC, setup request message of the UE upon successful admission control of a User Equipment, UE, at the DU. In some embodiments, the DU may directly reply to the RRC setup request by transmitting a RRC setup message. Direct reply to the RRC setup request message is possible because the DU is aware of the radio bearer configuration of the CU in advance, before receiving the RRC setup request from the UE. Thus, overall signalling may be reduced while enabling fast setup of the RRC connection.

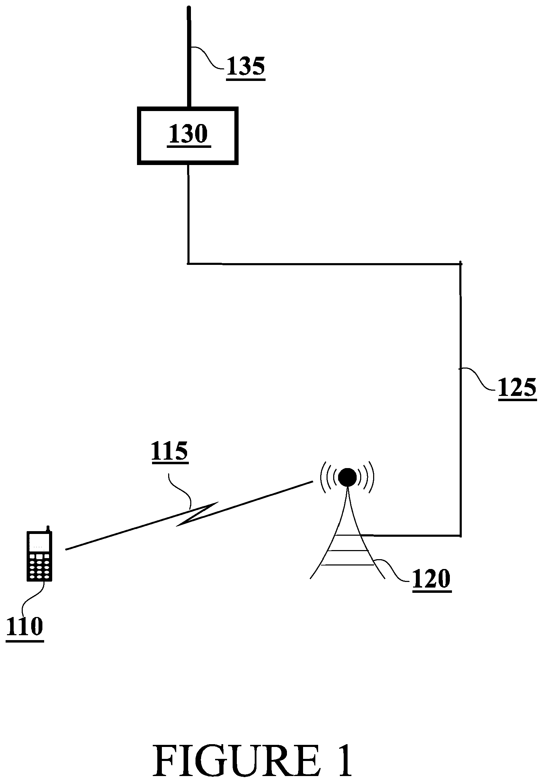

FIGURE 1 illustrates an exemplary network scenario in accordance with at least some embodiments. According to the example scenario of FIGURE 1, there may be a cellular communication network, which comprises UE 110, Base Station, BS, 120, and core network element 130. In general, BS 120 may be referred to as a radio access network node as well.

UE 110 may comprise, for example, a smartphone, a cellular phone, a Machine-to-Machine, M2M, node, Machine-Type Communications node, MTC, an Internet of Things, IoT, node, a car telemetry unit, a laptop computer, a tablet computer or, indeed, another kind of suitable UE or mobile station. In the example system of FIGURE 1, UE 110 may communicate wirelessly with BS 120, or with a cell of BS 120, via air interface 115. In some embodiments, BS 120 may be considered as a serving BS, for UE 110.

UE 110 may be connected to BS 120 via air interface 115. Air interface 115 between UE 110 and BS 120 may be configured in accordance with a Radio Access Technology, RAT, which UE 110 and BS 120 are configured to support. Examples of cellular RATs include Long Term Evolution, LTE, New Radio, NR, which may also be known as fifth generation, 5G, radio access technology and MulteFire. For example, in the context of LTE, BS 120 may be referred to as eNB while in the context of NR, BS 120 may be referred to as gNB. In any case, example embodiments are not restricted to any particular wireless technology. Instead, example embodiments may be exploited in any wireless communication network wherein it is desirable to improve admission control and network sharing when a DU and at least one CU is used.

BS 120 may be connected, directly or via at least one intermediate node, with core network 130 via interface 125. Core network 130 may be, in turn, coupled via interface 135 with another network (not shown in FIGURE 1), via which connectivity to further networks may be obtained, for example via a worldwide interconnection network. BS 120 may be connected with at least one other BS as well via an inter-base station interface (not shown in FIGURE 1), even though in some example embodiments the inter-base station interface may be absent. BS 120 may be connected, directly or via at least one intermediate node, with core network 130 or with another core network.

In some embodiments, BS 120 may further comprise a DU and at least one CU. However, in some embodiments, the DU and the CU may be located in separate parts of the network, i.e., in separate network elements/nodes. For instance, the DU may be located in BS 120 while the CU may be located in core network 130. One DU may be connected to multiple CUs, via F1 interfaces for example. On the other hand, one CU may be connected to multiple DUs, possibly via said F1 interfaces. The DU may be responsible for handling layers from the physical layer to the Radio Link Control, RLC, layer, while the at least one CU may be responsible for handling the Packet Data Convergence Protocol, PDCP, layer and layers above the PDCP layer. That is to say, the CU-DU split may be done between the RLC and the PDCP layer.

The CU may be a logical node and it may perform functions of a BS, such as, for example, transfer of user data, mobility control, radio access network sharing and session management. In some embodiments, the CU may be referred to as a Baseband Unit, BBU, for example. Moreover, the DU may be a logical node as well. The DU may also perform some, i.e., a subset of, functions of a BS. In some embodiments, the DU may be referred to as a Remote Radio Head, RRH, for example. That is to say, functions of a base station may be split between a DU and a CU.

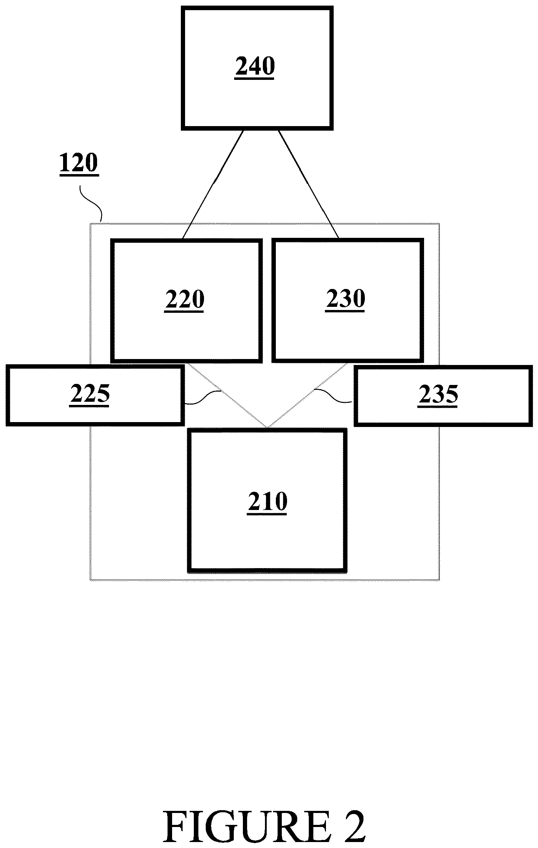

FIGURE 2 illustrates a base station in accordance with at least some embodiments. More specifically, FIGURE 2 illustrates a BS, such as a gNB, with a disaggregated, i.e., distributed, architecture in which DU 210 may be shared by two CUs, CU 220 and another CU 230. That is to say, DU 210 may be shared by two operators while logical CUs 220 and 230 are controlled separately per operator.

As shown in FIGURE 2, in some embodiments BS 120 of FIGURE 1 may comprise DU 210. DU 210 may be a shared logical DU for two operators, such as a first operator and second operator, for example. The first operator may offer a first Public Land Mobile Network, PLMN, and the second operator may offer a second PLMN, e.g., for UE 110. CU 220 may be a separate logical CU of the first operator, i.e., CU 220 may be associated with the first PLMN. Another CU 230 may be a separate logical CU of the second operator, i.e., another 230 may be associated with the second PLMN

First interface 225 may be an interface between DU 210 and CU 220, such as an F1 interface towards CU 220 controlled by the first operator. Second interface 235 may be an interface between DU 210 and another CU 230, such as an F1 interface towards another CU 230 controlled by the second operator. CU 220 and another CU 230 may be further connected to Access and Mobility management Function, AMF, 240.

Some embodiments of the present invention provide admission control improvements for DU 210, such as a gNB-DU, regardless of whether there is one CU, such as CU 220, or more than one CU, such as CU 220 and another CU 230. For instance, an optimized solution may be provided to simplify signalling and reduce a setup time by one round trip time between DU 210 and CU 220. The reduction of the setup time may be beneficial for example in case of services requiring very fast setup or with critical delay constraints, such as in case of Ultra-Reliable Low-Latency Communication, URLLC, emergency services, etc.

Some embodiments of the present invention allow DU 210, upon successful admission control of UE 110 at DU 210, to directly reply to a RRC setup request message of UE 110 with a response, for example with a RRC setup message. So the RRC setup message may be a response to the RRC setup request message. DU 210 may have received the radio bearer configuration of CU 220 in advance from CU 220, in a F1 setup response message for example (F1 SETUP RESPONSE), and hence DU 210 already has all the required information for transmitting the response. Thus, overall signalling over first interface 225, such as the F1 interface, between DU 210 and CU 220, may be reduced, because DU 210 does not have a need to query the radio bearer configuration of CU 220 for every UE, every time admission control succeeds at DU 210. That is to say, the need for querying CU 220 about the radio bearer configuration of CU 220 at every successful admission control may be thus eliminated. In some embodiments, the RRC setup message may be referred to as RRCSetup and/or the RRC setup request message may be referred to as RRCSetupRequest.

That is to say, DU 210 does not need to forward a RCC setup request message to CU 220 within an initial uplink radio resource control message transfer message upon successful admission control procedure at DU 210 during an initial access procedure of UE 110. Consequently, DU 210 does not need to forward a RRC setup message, which would be otherwise received from CU 220 in a downlink RRC message transfer message, to UE 110 either. Hence, DU 210 may transmit the response to UE 110 without transmitting an additional message, such as the initial uplink radio resource control message transfer message to CU 220. DU 210 may also transmit the response without receiving an additional message, such as the downlink RRC message transfer message, from CU 220 after reception of the message comprising the radio bearer configuration of CU 220 and prior to transmission of the response. The message comprising the radio bearer configuration of CU 220 may be an interface setup response message, such as a F1 setup response associated with a setup of first interface 225.

These advantages may be achieved by transmitting the radio resource configuration of CU 220 from CU 220 to DU 210 for example during a setup of first interface 225, such as during a setup of the F1 interface. That is to say, CU 220 may provide the radio bearer configuration that it uses towards DU 210 to DU 210 before UE 110 transmits the RRC setup request message. The radio bearer configuration may be provided in a F1 setup response message for example. The radio bearer configuration of CU 220 may be common for all UEs, i.e., it does not differ on a per UE basis. The radio bearer configuration of CU 220 may be common for all UEs that are in the same PLMN as CU 220.The radio bearer configuration needs to be provided to DU 210 once.

The radio bearer configuration of CU 220 is enough to generate the response, such as the RRC setup message, towards UE 110. That is to say, during initial access of UE 110, DU 210 is able to directly reply and transmit the response, upon successful admission control at DU 210, to a RRC setup request message received from UE 110, because DU 210 already has the radio bearer configuration (RadioBearerConfig) of CU 220.

The radio bearer configuration of CU 220 may refer to the radio bearer configuration configured by CU 220, i.e., at CU 220, for example for all UEs associated with CU 220. The radio bearer configuration of CU 220 may be used towards DU 210 by CU 220, i.e., the radio bearer configuration of CU 220 may be the radio bearer configuration used at CU 220. Hence, the radio bearer configuration of CU 220 may be associated with CU 220.

In some embodiments, the RRC setup message may not be a cyphered message, such as a PDCP cyphered message, so the RRC setup message may be generated without help of the PDCP layer, wherein the PDCP layer may be located at CU 220.

In some embodiments, transmission of the response, such as the RRC setup message, by DU 210 to UE 110, directly upon successful admission control at DU 210 may be handled as an optional feature, based on O&M configuration for example. Alternatively, or in addition, transmission of the response directly upon successful admission control at DU 210 may be configured for certain services and/or UEs, but not for all. If transmission of the response directly upon successful admission control at DU 210 is not enabled, DU 210 may request the radio bearer configuration of CU 220 from CU 220 upon receiving the RRC setup request message. Such flexibility may be beneficial in some scenarios, as CU 220 may have an additional admission control mechanism, for example to allow an optimized setup procedure for UEs/services that benefit from the reduced setup time (e.g., URLLC, emergency service, certain types of UEs (government)) or to allow a two-step admission control operation. For instance, there may be a first admission control mechanism at DU 210 and a secondary access control mechanism at CU 220, to improve security.

In addition, some embodiments of the present invention provide improvements for network sharing scenarios, wherein there may be more than one CU, such as CU 220 and another CU 230 as shown in FIGURE 2. For instance, alignment of radio bearer configurations of CU 220 and another CU 230 beforehand by the first operator and the second operator, respectively, may be avoided. Thus, each operator may be allowed to use its preferred radio bearer configuration, thereby enabling further flexibility. Likewise, a delta configuration at a CU, at another CU 230 for example, may be derived without further coordination among the operators sharing the network. Each operator may hence configure their preferred radio bearer configuration for their corresponding logical CU.

Each CU may transmit the radio bearer configuration that it uses towards DU 210. For instance, CU 220 may transmit its radio bearer configuration to DU 210 for example during a setup of first interface 225, such as a setup of a first F1 interface towards DU 210, and another CU 230 may transmit its radio bearer configuration to DU 210 for example during a setup of second interface 235, such as a setup of a second F1 interface. The radio bearer configurations may be transmitted in F1 setup response messages for example. The radio bearer configuration of CU 220 may be common for all UEs associated with CU 220 while the radio bearer configuration of another CU 230 may be common for all UEs associated with another CU 230. Both radio bearer configurations may be transmitted to DU 210 once.Upon receiving the radio bearer configurations, DU 210 may store the radio bearer configurations of each CU and use the stored radio bearer configurations later on when a setup request message is received from UE 110.

When an initial access of UE 110 takes place, i.e., DU 210 receives a RRC setup request message from UE 110, DU 210 may detect that a PLMN of CU 220, i.e., the first PLMN, does not correspond to a PLMN of UE 110. Responsive to the detection, DU 210 may then transmit a message comprising the radio bearer configuration of CU 220 to another CU 230. The message comprising the radio bearer configuration of CU 220 may be an initial uplink RRC message transfer message sent to another 230, which handles the PLMN corresponding to the PLMN of UE 110, such as the second PLMN

Upon receiving the message comprising the radio bearer configuration of CU 220, another CU 230 may detect a need for a different radio bearer configuration based on the received radio bearer configuration of CU 220. For instance, an information element may comprise the radio bearer configuration of CU 220. CU 230 may thus utilize the radio bearer configuration of CU 220 to generate a delta configuration towards DU 210 without further coordination among the operators sharing the network. If the information element in the message comprising the radio bearer configuration of CU 220 is not received by another CU 230, another CU 230 may simply use its own radio bearer configuration to generate the delta configuration or it may need to coordinate with all the network sharing operators to use the same radio bearer configuration.

These advantages may be achieved by transmitting the radio resource configuration of CU 220 to DU 210 for example during a setup of first interface 225. Also, the CUs, such as CU 220 and another CU 230, do not need to use the same radio bearer configuration.

Embodiments of the present invention therefore cover at least two scenarios, wherein it is beneficial to transmit the radio bearer configuration of at least CU 220 to DU 210, for example during a setup of a F1 interface, thereby enabling reduction of signaling during admission control of UE 110 and quick responding, while also solving issues related to network sharing.

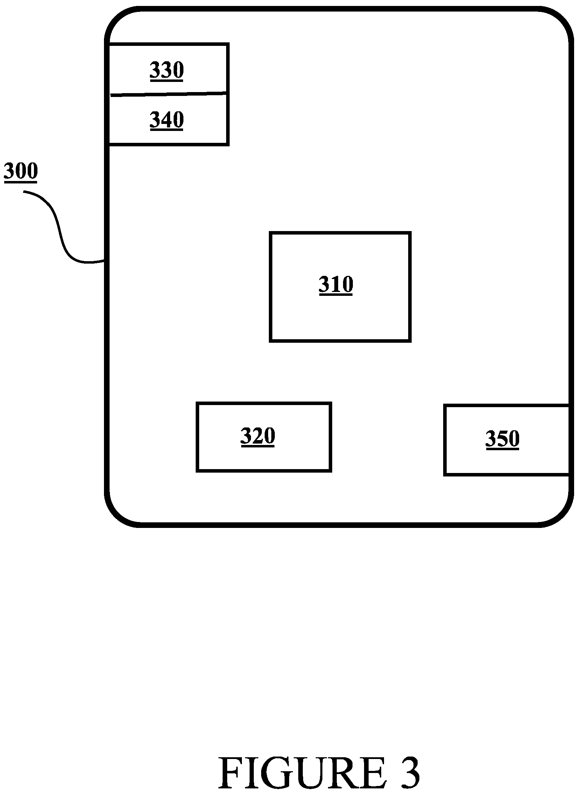

FIGURE 3 illustrates an example apparatus capable of supporting at least some embodiments. Illustrated is device 300, which may comprise, for example, a DU or a CU, or a device controlling functioning thereof. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. Processor 310 may comprise at least one Application-Specific Integrated Circuit, ASIC. Processor 310 may comprise at least one Field-Programmable Gate Array, FPGA. Processor 310 may comprise an Intel Xeon processor for example. Processor 310 may be means for performing method steps in device 300, such as determining, causing transmitting and causing receiving. Processor 310 may be configured, at least in part by computer instructions, to perform actions.

A processor may comprise circuitry, or be constituted as circuitry or circuitries, the circuitry or circuitries being configured to perform phases of methods in accordance with embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular standard, such as a standard defined by the 3GPP. Transmitter 330 may comprise more than one transmitter. Receiver 340 may comprise more than one receiver. Transmitter 330 and/or receiver 340 may be configured to operate in accordance with Global System for Mobile communication, GSM, Wideband Code Division Multiple Access, WCDMA, Long Term Evolution, LTE, and/or 5G standards, for example.

Device 300 may comprise User Interface, UI, 350. UI 350 may comprise at least one of a display, a keyboard, a touchscreen, a vibrator arranged to signal to a user by causing device 300 to vibrate, a speaker and a microphone. A user may be able to operate device 300 via UI 350, for example to configure device 300 and/or functions it runs.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIGURE 3. In some embodiments, device 300 lacks at least one device described above. For example, device 300 may not have UI 350.

Processor 310, memory 320, transmitter 330, receiver 340 and/or UI 350 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the present invention.

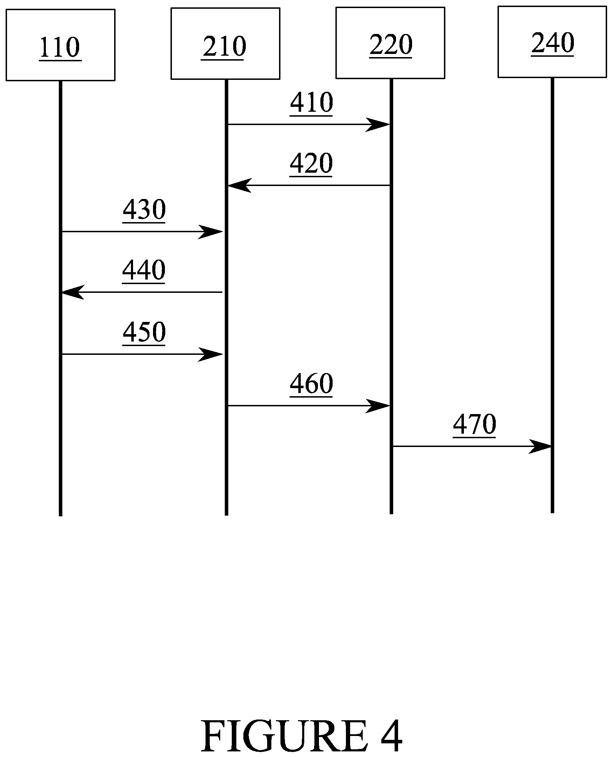

FIGURE 4 illustrates an exemplary signalling graph in accordance with at least some embodiments. On the vertical axes are disposed, from the left to the right, UE 110 of FIGURE 1 along with DU 210, CU 220 and AMF 240 of FIGURE 2. Time advances from the top toward the bottom. In some embodiments, UE 110 may be a 5G UE, DU 210 may be a gNB-DU and CU 220 may be a gNB-CU. The exemplary signalling graph of FIGURE 4 may be applied for example in 3GPP standard specification TS 38.401, e.g., in section 8.1.

At step 410, DU 210 may transmit an interface setup request message, such as a F1 setup request (F1 SETUP REQUEST), to CU 220. The interface setup request message may be a request to set up an interface, such as a F1 interface like first interface 225 in FIGURE 2, between DU 210 and CU 220.

In response to receiving the interface setup request message, CU 220 may transmit at step 420 a message comprising a radio bearer configuration of CU 220 to DU 210. The message comprising the radio bearer configuration of CU 220 may be transmitted over the interface between DU 210 and CU 220. In some embodiments, the message comprising the radio bearer configuration of CU 220 may be an interface setup response message, such as a F1 setup response message, and hence the message comprising the radio bearer configuration of CU 220 may comprise information associated with the interface between DU 210 and CU 220, and said information associated with the interface between DU 210 and CU 220 may comprise information associated with a setup of the interface between DU 210 and CU 220. Steps 410 and 420 may be performed during a setup phase of the interface (e.g., F1 setup phase). The message comprising the radio bearer configuration of CU 220 may be transmitted with a CU to DU Container (RadioBearerConfig IE).

At step 430, UE 110 may transmit a RRC setup request message to DU 210. In response to receiving the RRC setup request message, DU 210 may transmit at step 440 a response to the RRC setup request message, the response comprising the radio bearer configuration of CU 220. The response transmitted at step 440 may be a RRC setup message, i.e., the response to the RRC setup request message may be a RRC setup message.

In some embodiments, the response may be transmitted by DU 210 at step 440 directly upon successful admission control of UE 110 by DU 210. The response may be transmitted to UE 110 by DU 210 at step 440 without transmitting an additional message to CU 220 and/or without receiving an additional message from CU 220 between reception of the message comprising the radio bearer configuration of CU 220 from CU 220 and transmission of the response to the received RRC setup request message to UE 110. That is to say, the response may be transmitted to UE 110 by DU 210 at step 440 without transmitting an additional message to CU 220 and/or without receiving an additional message from CU 220 after reception of the message comprising the radio bearer configuration of CU 220 and prior to transmission of the response to the RRC setup request message to UE 110. In some embodiments, the response may be encoded (Encode RRC: RRC SETUP).

In some embodiments, the response may be transmitted by DU 210 at step 440 directly upon unsuccessful admission control (i.e. failure) of UE 110 by DU 210. The response may be transmitted to UE 110 by DU 210 at step 440 without transmitting an additional message to CU 220 and/or without receiving an additional message from CU 220 between reception of the message comprising the radio bearer configuration of CU 220 from CU 220 and transmission of the response to the received RRC setup request message to UE 110. That is to say, the response may be transmitted to UE 110 by DU 210 at step 440 without transmitting an additional message to CU 220 and/or without receiving an additional message from CU 220 after reception of the message comprising the radio bearer configuration of CU 220 and prior to transmission of the response to the RRC setup request message to UE 110. In case of unsuccessful admission control, the response may be a RRC reject message, i.e., a rejection to the RRC setup request message. In some embodiments, the RRC reject message may be referred to as RRCReject. In some embodiments, the response may be encoded (Encode RRC: RRC REJECT).

At step 450, UE 110 may transmit a RRC setup complete message upon receiving the response to the RRC setup request message from DU 210. After that, DU 210 may transmit an initial uplink RRC message transfer message to CU 220 at step 460. Upon receiving the initial uplink RRC message transfer message, CU 220 may transmit at step 470 an initial UE message (NGAP: Initial UE Message) to AMF 240.

In some embodiments, DU 210 may receive from another CU 230 a message comprising a radio bearer configuration of another CU 230 (not shown in FIGURE 4). Alternatively, or in addition, DU 210 may detect that a PLMN of CU 220 does not correspond to a PLMN of UE 110 and transmit, based on the detection, a message comprising the radio bearer configuration of CU 220 to another CU 230. The message comprising the radio bearer configuration of CU 220 may an initial uplink radio resource control message transfer message.

Some embodiments of the present invention may be applied for example in 3GPP standard specification TS 38.473. According to some embodiments, a F1 setup response message, to be defined in section 9.2.1.5 of TS 38.473 for example, may comprise at least one of the following: IE/Group Name such as "Radio Bearer Configuration", Presence such as "M", IE type and reference such as "9.3.1.x", Semantics description such as "Indicates the required Radio Bearer Configuration (RadioBearerConfig) configured at gNB-CU, Criticality such as "YES" and Assigned Criticality such as "reject". The F1 setup response message may be transmitted by CU 220 to transfer information associated with an F1-C interface instance. The F1 setup response may be transmitted from CU 220, such as gNB-CU, to DU 210, such as gNB-DU.

Some embodiments of the present invention may be applied for example in 3GPP standard specification TS 38.473. According to some embodiments, an initial uplink RRC message transfer message, to be defined in section 9.2.3.1 of TS 38.473 for example, may comprise at least one of the following: IE/Group Name such as "Radio Bearer Configuration", Presence such as "O", IE type and reference such as "9.3.1.x", Semantics description such as "In case of network sharing, it indicates the required Radio Bearer Configuration (RadioBearerConfig) to be utilized for this UE", Criticality such as "YES" and Assigned Criticality such as "reject". The initial uplink RRC message transfer message may be transmitted by DU 210 to transfer an initial layer 3 message to CU 220 over an F1 interface. The initial uplink RRC message transfer message may be transmitted from DU 210, such as gNB-DU, to CU 220, such as gNB-CU.

Some embodiments of the present invention may be applied for example in 3GPP standard specification TS 38.401. According to some embodiments, an initial uplink RRC message transfer message, to be defined at least partly in section 8.11.2 of TS 38.401, at step 7, for example, may indicate that if a gNB-DU_{B}, such as DU 210, detects that the radio bearer configuration of the gNB- CU_{A}, such as CU 220, differs from the one utilized by a gNB-CU_{B}, such as another CU 230, the gNB-DU_{B} includes the radio bearer configuration associated with the gNB-CU_{A} to the initial uplink RRC message transfer message.

Embodiments of the present invention therefore provide a clean, simplified solution, wherein DU 210 is aware of all radio bearer configurations of all logical CUs, such as CU 220 and another CU 230, made known already during a setup of the F1 interface(s) for example. Thus, whenever DU 210 needs to forward the RRC setup message and a RRC setup complete message in a successful case towards a different logical CU (e.g., when UE 110 selected a PLMN handled in a different logical CU), DU 210 may determine whether it is also required to provide the radio bearer configuration that is utilized in the previous CU only in case the radio bearer configuration is different. If the radio bearer configurations are already aligned between CU 220 and another CU 230, there is no need to send this information.

This is beneficial at least from the signalling perspective, because DU 210 does not need to send additional, useless information to another CU 230. Further, when the radio bearer configurations of CU 220 and another CU 230 differ, DU 210 does not need to require another CU 230 to decode a RRC container to determine the radio bearer configuration of CU 220. The proposed radio bearer configuration information element, when included already implicitly indicates that a different radio bearer configuration was used at CU 220. Thus, embodiments of the present invention provide an efficient solution both from the signalling and implementation perspectives.

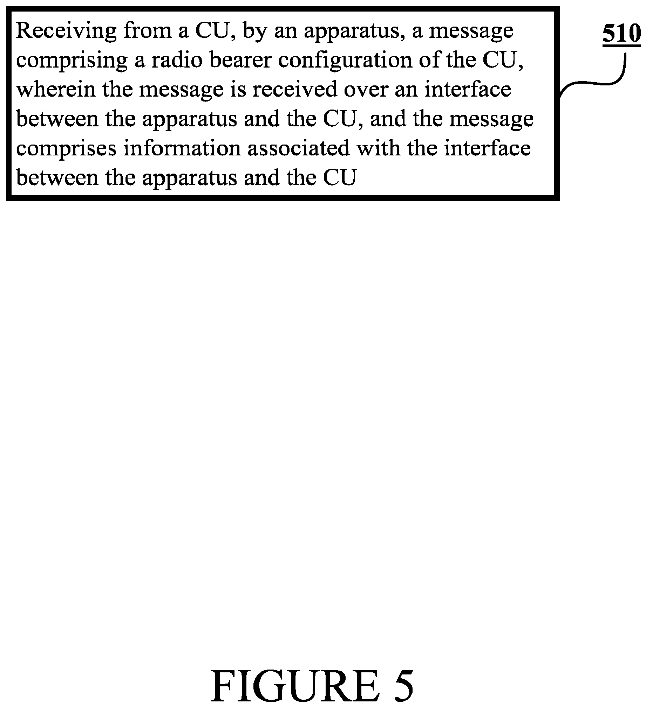

FIGURE 5 is a flow graph of a first method in accordance with at least some embodiments. The phases of the illustrated first method may be performed by DU 210 or by a control device configured to control the functioning thereof, possibly when installed therein. DU 210 may be located in a distributed architecture of a radio access network node, such as BS 120. In some embodiments, DU 210 may be located in the radio access network node along with CU 220 and the message comprising the radio bearer configuration of CU 220 may be received over the interface between DU 210 and CU 220.

The first method may comprise, at step 510, receiving by an apparatus, from a CU, a message comprising a radio bearer configuration of the CU, wherein the message is received over an interface between the apparatus and the CU, and the message comprises information associated with the interface between the apparatus and the CU. The apparatus may be DU 210 or a control device configured to control the functioning thereof, possibly when installed therein.

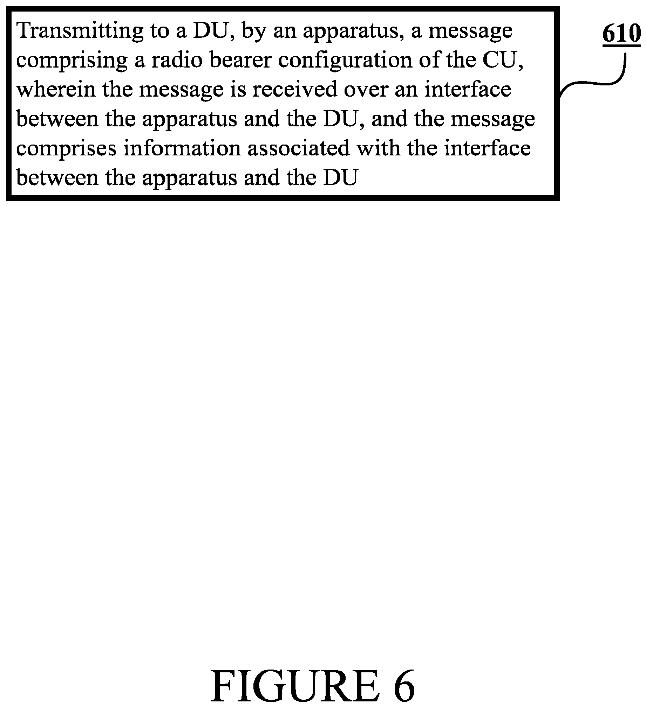

FIGURE 6 is a flow graph of a second method in accordance with at least some embodiments. The phases of the illustrated second method may be performed by CU 220 or by a control device configured to control the functioning thereof, possibly when installed therein. CU 220 may be located in the distributed architecture of the radio access network node, such as BS 120. In some embodiments, CU 220 may be located in the radio access network node along with DU 210 and the message comprising the radio bearer configuration of CU 220 may be transmitted over the interface between DU 210 and CU 220.

The second method may comprise, at step 610, transmitting by an apparatus, to a DU, a message comprising a radio bearer configuration of the CU, wherein the message is transmitted over an interface between the apparatus and the DU, and the message comprises information associated with the interface between the apparatus and the DU. The apparatus may be CU 220 or a control device configured to control the functioning thereof, possibly when installed therein.

It is to be understood that the embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples may be referred to herein along with alternatives for the various components thereof. It is understood that such embodiments, examples, and alternatives are not to be construed as de facto equivalents of one another, but are to be considered as separate and autonomous representations.

In an exemplary embodiment, an apparatus, such as, for example, a DU or a CU, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processor to perform a process comprising the embodiments described above and any combination thereof.

In an exemplary embodiment, an apparatus, such as, for example, a DU or a CU, may comprise at least one processor, and at least one memory including computer program code, wherein the at least one memory and the computer program code are configured to, with the at least one processor, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the embodiments in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments find industrial application in cellular communication networks, for example in networks wherein a DU and at least one CU is used.

### ACRONYMS LIST

- 3GPP: 3rd Generation Partnership Project
- AMF: Access and Mobility Function
- BBU: Baseband Unit
- BS: Base Station
- CU: Central Unit
- DU: Distributed Unit
- GSM: Global System for Mobile communication
- IoT: Internet of Things
- LTE: Long-Term Evolution
- M2M: Machine-to-Machine
- MAC: Media Access Control
- NFC: Near-Field Communication
- NR: New Radio
- PDCP: Packet Data Convergence Protocol
- PLMN: Public Land Mobile Network
- RAN: Radio Access Network
- RAT: Radio Access Technology
- RLC: Radio Link Control
- RRC: Radio Resource Control
- RRH: Remote Radio Head
- UE: User Equipment
- UI: User Interface
- URLLC: Ultra-Reliable Low-Latency Communication
- WCDMA: Wideband Code Division Multiple Access

**REFERENCE SIGNS LIST**

| | |
|---|---|
| 110 | User Equipment |
| 115 | Air interface |
| 120 | Base Station |
| 125, 135 | Wired interfaces |
| 130 | Core Network |
| 210 | Distributed Unit |
| 220, 230 | Central Units |
| 225, 235 | F1 interfaces |
| 240 | AMF |
| 300 - 350 | Structure of the apparatus of FIGURE 3 |
| 410 - 470 | Phases of the signaling graph of FIGURE 4 |
| 510 | Phase of the first method in FIGURE 5 |
| 610 | Phase of the second method in FIGURE 6 |

## Claims

1. An apparatus, comprising:
means for receiving, from a central unit, a message comprising a radio bearer configuration of the central unit, wherein the message is received over an interface between the apparatus and the central unit, and the message comprises information associated with the interface between the apparatus and the central unit.

2. An apparatus according to claim 1, further comprising:
means for receiving, from a user equipment, a radio resource control setup request message upon receiving the message from the central unit; and
means for transmitting, to the user equipment, a response to the received radio resource control setup request message, wherein the response comprises the radio bearer configuration of the central unit or a rejection to the radio resource control setup request message.

3. An apparatus according to claim 2, wherein the response is transmitted directly upon successful admission control of the user equipment or directly upon unsuccessful admission control of the user equipment.

4. An apparatus according to claim 2 or claim 3, wherein the response is transmitted to the user equipment without transmitting an additional message to the central unit and/or without receiving an additional message from the central unit after reception of the message comprising the radio bearer configuration of the central unit and prior to transmission of the response.

5. An apparatus according to any of the preceding claims, wherein the interface is an F1 interface and the message received from the central unit is an F1 setup response message.

6. An apparatus according to any of the preceding claims, wherein the message comprising the radio bearer configuration of the central unit is received from the central unit during a setup of the interface and the radio bearer configuration of the central unit is common for all user equipments associated with the central unit.

7. An apparatus according to any of the preceding claims, further comprising:
means for detecting that a public land mobile network of the central unit does not correspond to a public land mobile network of the user equipment; and
means for transmitting, based on the detection, a message comprising the radio bearer configuration of the central unit to another central unit.

8. An apparatus according to claim 7, wherein the transmitted message comprising the radio bearer configuration of the central unit is an initial uplink radio resource control message transfer message.

9. An apparatus according to any of the preceding claims, further comprising:
means for receiving, from another central unit, a message comprising a radio bearer configuration of said another central unit.

10. An apparatus, comprising:
means for transmitting, to a distributed unit, a message comprising a radio bearer configuration of the apparatus, wherein the message is transmitted over an interface between the apparatus and the distributed unit, and the message comprises information associated with the interface between the apparatus and the distributed unit.

11. An apparatus according to claim 10, wherein said information associated with the interface between the apparatus and the distributed unit comprises information associated with a setup of the interface.

12. An apparatus according to claim 10 or claim 11, wherein the interface is a F1 interface and the message received from the central unit is a F1 setup response message.

13. A method for a distributed unit, comprising:
receiving from a central unit, by an apparatus, a message comprising a radio bearer configuration of the central unit, wherein the message is received over an interface between the apparatus and the central unit, and the message comprises information associated with the interface between the apparatus and the central unit.

14. A method for a central unit, comprising:
transmitting to a distributed unit, by an apparatus, a message comprising a radio bearer configuration of the apparatus, wherein the message is transmitted over an interface between the apparatus and the distributed unit, and the message comprises information associated with the interface between the apparatus and the distributed unit.

15. A computer program configured to perform a method according to claim 13 or claim 14.
